(19) Europäisches Patentamt
European Patent Office
Office européen des brevets

(11) **EP 3 176 937 A1**

(12) **EUROPÄISCHE PATENTANMELDUNG**

(43) Veröffentlichungstag:
**07.06.2017  Patentblatt 2017/23**

(51) Int Cl.:
*H02M 7/219* (2006.01)         *H02M 7/17* (2006.01)
*H02M 1/10* (2006.01)          *H02M 5/12* (2006.01)
*H02M 1/32* (2007.01)          *H02J 7/02* (2016.01)
*H02M 3/158* (2006.01)

(21) Anmeldenummer: **15197248.6**

(22) Anmeldetag: **01.12.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **AEG Power Solutions GmbH
59581 Warstein-Belecke (DE)**

(72) Erfinder:
• **KEMPEN, Stefan
  59821 Arnsberg (DE)**
• **WEGENER, Hans
  57392 Schmallenberg (DE)**
• **MAIBERG, Paul
  59609 Anröchte (DE)**

(74) Vertreter: **Graefe, Jörg et al
Fritz Patent- und Rechtsanwälte
Partnerschaft mbB
Postfach 1580
59705 Arnsberg (DE)**

(54) **STROMRICHTERANORDNUNG**

(57)     Stromrichteranordnung zum Gleichrichten von Wechselstrom mit mindestens einer Phase
- mit zumindest einem Wechselstromeingang (L1, N; L1, L2, L3) zur Verbindung mit Außenleitern eines Drei- oder Mehrphasenwechselstromnetzes oder mit einem Außenleiter-Neutralleiter-Paar eines Einphasenwechselstromnetzes,
- mit einem Gleichstromausgang (P, M),
- mit zumindest einer Schaltung (A, A1, A2) aus ersten steuerbaren Leistungshalbleiterbauelementen (30),
- wobei die ersten Leistungshalbleiterbauelemente (30) der zumindest einen Schaltung (A, A1, A2) aus ersten steuerbaren Leistungshalbleiterbauelementen (30) durch elektrische Leiter so verbunden sind, dass sie in einer Brückenschaltung (B, B6, B61, B62) angeordnet sind,
- wobei die zumindest eine Brückenschaltung (B, B6, B61, B62) erste Anschlüsse (31) hat, die mittelbar oder unmittelbar mit Anschlüssen (L1, N; L1, L2, L3) des Wechselstromeingangs verbunden sind, und
- die zwei zweite Anschlüsse (32) hat, die mit Anschlüssen (P, M) des Gleichstromausgangs verbunden sind, und
- mit einem Steuerungsmittel zur Steuerung der ersten Leistungshalbleiterbauelemente (30) mit einem in dem Steuerungsmittel implementierten Steuerverfahren ? und wobei durch das Steuerverfahren und die zumindest eine Brückenschaltung (B, B6, B61, B62) eine minimale einstellbare Gleichspannung am Gleichstromausgang der Anordnung vorgegeben ist, wobei die Stromrichteranordnung Mittel (S, T; S1, S2, S11, S12, S13) zum Ändern der minimalen einstellbaren Gleichspannung am Gleichstromausgang (P, M) der Anordnung aufweist.

Fig. 3

EP 3 176 937 A1

**Beschreibung**

Die vorliegende Erfindung betrifft eine Stromrichteranordnung.

Aus dem Stand der Technik sind bidirektionale Stromrichteranordnungen bekannt, die dazu genutzt werden, Batterien an ein Dreiphasenwechselstromnetz anzuschließen, so dass über die Stromrichteranordnung Energie aus dem Netz entnommen werden kann und in der Batterie gespeichert werden kann oder Energie der Batterie entnommen werden kann und dem Netz zugeführt werden kann (Batteriespeichersysteme, Storage Converter). Als Stromrichteranordnung werden häufig gesteuerte B6-Brückenschaltungen verwendet, die aus IGBTs aufgebaut sind. Anstelle der IGBTs werden auch andere Leistungshalbleiterschalter verwendet.

Eine Eigenschaft der Stromrichteranordnung mit einer IGBT-B6-Brückenschlatung ist, dass die Gleichspannung im Gleichrichterbetrieb von der Spannung auf der Wechselstromseite abhängt. Die minimale, einstellbare Spannung kann wie folgt angegeben werden:

$$ U_{DC_{min}} \approx U_{AC} \sqrt{2} $$

Da die Netzspannung gegeben ist und damit der Effektivwert $U_{AC}$ der Spannung auf der Wechselstromseite vorgegeben ist, ist somit auch die minimale Spannung $U_{DC_{min}}$ vorgegeben, die im Gleichrichterbetrieb auf der Gleichstromseite eingestellt werden kann.

Wird durch die Batterie oder eine Last auf der Gleichstromseite eine kleinere Spannung als die minimale, einstellbare Spannung $U_{DC_{min}}$ vorgegeben, ist der Strom vom Netz zur Batterie nicht mehr einstellbar und in erster Linie durch den Innenwiderstand der Batterie oder der Last begrenzt. Je nach Batterie oder Last kann dieser Strom dann sehr große Werte annehmen, welche die Batterie, die Last oder die Zuleitungen oder andere Komponenten auf der Gleichstromseite und/oder der Wechselstromseite überlasten können. In einem solchen Fall, also bei niedrigen Spannungen auf der Gleichstromseite, ist ein kontrolliertes Laden der Batterie somit nicht möglich. Ein Laden bei niedriger Batteriespannung ist in der Praxis aber hin und wieder notwendig, nämlich beim ersten Laden von neuen Batterien, dem so genannten Formatieren, und bei der Wiederaufladung einer tiefentladenen Batterie.

Für das Formatieren von neuen Batterien und das Wiederaufladen einer tiefentladenen Batterie werden derzeit häufig zusätzliche Einrichtungen benötigt, da mit den bekannten Gleichrichtern ein Aufladen der neuen Batterien bzw. der tiefentladenen Batterien nicht möglich ist, da bei der dazu notwendigen niedrigen Spannung der Gleichrichter nicht mehr einstellbar ist.

Hier setzt die Erfindung an.

Die Erfindung schlägt daher eine Stromrichteranordnung vor, an dessen Gleichspannungsausgang im Gleichrichterbetrieb geringe Gleichspannungen eingestellt werden können.

Die Stromrichteranordnung wird erfindungsgemäß dadurch geschaffen, dass die Stromrichteranordnung Mittel zum Ändern der minimalen einstellbaren Gleichspannung am Gleichstromausgang der Anordnung aufweist.

Erfindungsgemäße Stromrichteranordnungen können bidirektionale Stromrichteranordnungen, also Gleichrichteranordnungen und Wechselrichteranordnungen sein. Dass kann dadurch erreicht werden, dass Teile der Stromrichteranordnungen, die eine Gleichrichterfunktion erfüllen, auch eine Wechselrichterfunktion erfüllen. Die Schaltung aus den ersten Leistungshalbleiterbauelementen kann sowohl die Gleichrichterfunktion als auch die Wechselrichterfunktion erfüllen. Das trifft insbesondere zu, wenn die ersten Leistungshalbleiterbauelemente die Brückenschaltung bilden.

Ist eine erfindungsgemäße Anordnung eine bidirektionale Stromrichteranordnung, wird aus dem Gleichstromausgang ein Ein- und Ausgang für Gleichstrom und aus dem Wechselstromeingang wird ein Ein- und Ausgang für Wechselstrom.

An den Ein- und Ausgang für Gleichstrom einer erfindungsgemäßen Anordnung kann eine Batterie angeschlossen werden, die bei einer Gleichrichterfunktion der Anordnung Energie aus dem Netz, das an den Ein- und Ausgang für Wechselstrom angeschlossen ist, aufnimmt und speichert. Bei einer Wechselrichterfunktion kann Energie aus der Batterie entnommen werden und dem Wechselstromnetz zugeführt werden. Eine erfindungsgemäße Stromrichteranordnung mit wenigstens einer daran am Ein- und Ausgang für Gleichstrom angeschlossenen Batterie kann ein Batteriespeichersystem bilden.

Erfindungsgemäße Anordnungen mit den Mitteln zum Ändern der minimal einstellbaren Gleichspannung, die erfindungsgemäß vorgeschlagen werden, lassen sich grob in wenigstens zwei Gruppen von erfindungsgemäßen Anordnungen unterteilen.

In einer ersten Gruppe von erfindungsgemäßen Anordnungen nehmen die Mittel zum Ändern der minimal einstellbaren Gleichspannung die Wechselspannung am Wechselspannungseingang auf und stellen eine geänderte Wechselspannung an den ersten Anschlüssen der zumindest einen Brückenschaltung bereit. Die geänderte Wechselspannung ist vorzugsweise höher oder niedriger als die Netzspannung, die am Wechselspannungseingang vorliegt.

In einer zweiten Gruppe von erfindungsgemäßen Anordnungen ist die zumindest eine Schaltung oder eine der Schaltungen aus den ersten Leistungshalbleiterbauelementen so gestaltet, dass ihre Topologie geändert werden kann, also Strompfade umgeschaltet werden können. Die Topologie ist in einem ersten Zustand der Schaltung so, dass sie die Brückenschaltung bildet. In einem zweiten Zustand der änderbaren Schaltung ist die Topologie dagegen so, dass sie einen Gleichspannungswandler umfasst oder bildet. Die Schaltung kann dann je nach Ausführung der Erfindung auch einen Gleichrichter umfassen oder nicht. Der Gleichspannungswandler kann eine Gleichspannung ändern, die in einem aus der gleichen Schaltung gebildeten Gleichrichter oder in einem anderen Gleichrichter aus der am Wechselstromeingang anliegenden Wechselspannung erzeugt wird, wobei der andere Gleichrichter aus einer anderen aus ersten Leistungshalbleiterbauelementen gebildeten Schaltung gebildet ist. Der Gleichspannungswandler kann die Spannung insbesondere herabsetzen.

Der Wechselstromeingang bzw. der Ein- und Ausgang für Wechselstrom kann drei Wechselstromeingangsanschlüsse aufweisen. Die Brückenschaltung kann eine B6-Schaltung aus den ersten steuerbaren Leistungshalbleiterbauelementen sein, die in drei Halbbrücken angeordnet sind. Knoten der Halbbrücken können mit je einem ersten Anschluss der Brückenschaltung verbunden sein. Bei den Leistungshalbleiterbauelementen kann es sich um Leistungstransistoren, zum Beispiel IGBT oder MOS-FET handeln.

Erfindungsgemäße Anordnungen, die der ersten Gruppe zugeordnet werden können, sind in den Ansprüchen 2 bis 4 näher beschrieben. Die Ansprüche 5 bis 8 und 10 bis 16 betreffen erfindungsgemäße Anordnungen, die der zweiten Gruppe zugeordnet werden können.

Bei Anordnungen der ersten Gruppen können die Mittel zum Ändern der minimalen einstellbaren Gleichspannung am Gleichstromausgang zwischen den Wechselstromeingang und den ersten Anschlüssen der Brückenschaltung angeordnet sein. Sie können einen Transformator aufweisen. Der Transformator kann wenigstens eine Primärwicklung und eine Sekundärwicklung aufweisen.

Die Primärwicklung kann neben einem Anschluss für einen Außenleiteranschluss des Wechselstromeingangs der Anordnung an einem Ende der Wicklung wenigstens einen weiteren Anschluss für den gleichen Außenleiteranschluss des Wechselstromeingangs aufweisen, der eine Mittelanzapfung der Wicklung ist. Diese wenigstens zwei Anschlüsse der Wicklung sind dann über je einen bidirektionalen zweiten steuerbaren Schalter, insbesondere Schütz, Relais oder Leistungshalbleiterschalter wie Thyristoren oder Leistungstransistoren (IGBTs, Leistungs-MOS-FETs) mit dem Außenleiteranschluss des Wechselstromeingangs verbunden.

Alternativ kann die Sekundärwicklung neben einem Anschluss an einem Ende der Wicklung, der mit einem der ersten Anschlüsse der Brückenschaltung verbunden ist, wenigstens einen weiteren Anschluss für den gleichen der ersten Anschlüsse der Brückenschaltung aufweisen, der eine Mittelanzapfung der Sekundärwicklung ist. Diese wenigstens zwei Anschlüsse der Sekundärwicklung sind dann über je einen bidirektionalen zweiten steuerbaren Leistungshalbleiterschalter mit dem genannten Anschluss der ersten Anschlüsse der Brückenschaltung verbunden.

Die bidirektionalen zweiten steuerbaren Leistungshalbleiterschalter der Mittel zum Ändern der minimalen einstellbaren Gleichspannung am Gleichstromausgang können mittels der Steuerung wechselweise für die Dauer von vollen oder halben Perioden einer Spannung am Wechselspannungseingang einschaltbar oder ausschaltbar sein, mit Phasenanschnitt einschaltbar oder mit Phasenabschnitt ausschaltbar sein oder in Spannungsfolgesteuerung einschaltbar sein. Spannungsfolgesteuerungen sind zum Beispiel in dem Buch "Thyristorized Power Controllers" von Dubey et al, ISBN 978-0-85226-190-3, Neudruck von 2009 und auch in verschiedenen Patentanmeldungen der Anmelderin oder ihrer Rechtsvorgängerinnen beschrieben.

Bei Anordnungen der zweiten Gruppe können die Mittel zum Ändern der minimalen einstellbaren Gleichspannung am Gleichstromausgang Schalter umfassen. Diese Schalter sind vorzugsweise steuerbar und können elektromechanische Schalter wie Relais oder Schütze oder Leistungshalbleiterschalter wie Thyristoren oder Leistungstransistoren (zum Beispiel IGBTs, Leistungs-MOS-FETs) sein. Mit diesen Schaltern kann die Schaltung aus den ersten steuerbaren Leistungshalbleiterbauelementen durch Umschaltung von Strompfaden in zwei verschiedene Zustände gebracht werden. So lässt sich mittels der Schalter die Schaltung der ersten Leistungshalbleiterbauelemente aus der Brückenschaltung in einem ersten Zustand der Schaltung in eine Schaltung umfassend einen zumindest einphasigen Gleichrichter und einen Gleichspannungswandler in einem zweiten Zustand der Schaltung umwandeln und umgekehrt. Vorzugsweise fließt ein Strom vom Wechselstromeingang zum Gleichstromausgang der Stromrichteranordnung und umgekehrt im ersten Zustand und im zweiten Zustand immer durch die Schaltung und insbesondere über die ersten Leistungshalbleiterbauelemente, die von der Schaltung umfasst sind. Diese können dazu genutzt werden, um in einem dritten Zustand einen Stromfluss durch die Stromrichteranordnung zu unterbinden. In einem solchen dritten Zustand fließt dann auch kein Strom durch die Schalter der Mittel zum Ändern der minimalen einstellbaren Gleichspannung, so dass diese dann stromlos geschaltet werden könnten. Das ist insbesondere dann von Vorteil, wenn die Schalter elektromechanische oder mechanische Schalter wie Relais, Schütze oder dergleichen sind.

Bei einer erfindungsgemäßen Anordnung kann ein erster Schalter der Schalter der Mittel zum Ändern der minimalen einstellbaren Gleichspannung am Gleichstromausgang ein erster Wechselschalter sein. Dieser Wechselschalter kann einen gemeinsamen Anschluss haben, der im ersten Zustand der Schaltung einen der ersten Anschlüsse der Brückenschaltung bildet. Der Wechselschalter kann einen ersten Anschluss haben, der vom gemeinsamen Anschluss verschieden ist. Der erste Anschluss kann mit einem der Anschlüsse des Wechselstromeingangs der Anordnung verbunden sein.

Ein zweiter Schalter der Schalter der Mittel zum Ändern der minimalen einstellbaren Gleichspannung einer erfindungsgemäßen Anordnung kann ein zweiter Wechselschalter sein. Der zweite Wechselschalter kann einen gemeinsamen Anschluss haben, der mit einem ersten Anschluss des Gleichstromausgangs der Anordnung verbunden ist. Der zweite Wechselschalter kann einen ersten Anschluss haben, der von dem gemeinsamen Anschluss verschieden ist. Dieser erste Anschluss kann im ersten Zustand der Schaltung einen der zweiten Anschlüsse der Brückenschaltung bilden.

Gemäß der Erfindung ist es möglich, dass der erste Wechselschalter einen zweiten Anschluss hat, der von dem gemeinsamen Anschluss und dem ersten Anschluss des ersten Wechselschalters verschieden ist Außerdem kann der zweite Wechselschalter einen zweiten Anschluss haben, der von dem gemeinsamen Anschluss und dem ersten Anschluss des zweiten Wechselschalters verschieden ist. Die zweiten Anschlüsse der beiden Wechselschalter können miteinander verbunden sein.

Im zweiten Zustand der Schaltung einer erfindungsgemäßen Anordnung können die ersten Leistungshalbleiterbauelemente, die im ersten Zustand eine erste der drei Halbbrücken der B6-Brücke bilden, Schaltelemente des Gleichspannungswandlers bilden. Gleichzeitig können die ersten Leistungshalbleiterbauelemente, die im ersten Zustand eine zweite und/oder eine dritte der drei Halbbrücken der B6-Brücke bilden, im zweiten Zustand den Gleichrichter bilden.

Der Gleichrichter, der im zweiten Zustand durch die ersten Leistungshalbleiterbauelemente gebildet wird, die im ersten Zustand der Schaltung die zweite und/oder die dritte der drei Halbbrücken bilden, kann ein Brückengleichrichter sein, insbesondere eine B2-Brückenschaltung. Die ersten Leistungshalbleiterbauelemente, die im ersten Zustand der Schaltung die zweite und/oder die dritte der drei Halbbrücken bilden, können im zweiten Zustand der Schaltung Halbbrücken des Gleichrichters bilden.

Im zweiten Zustand der Schaltung kann der Knoten zwischen den die beiden Schaltelemente des Gleichspannungswandlers bildenden ersten Leistungshalbleiterbauelementen über den gemeinsamen Anschluss und den zweiten Anschluss des ersten Schalters und den zweiten Anschluss und den gemeinsamen Anschluss des zweiten Schalters mit dem ersten Anschluss des Gleichstromausgangs verbunden sein.

Im zweiten Zustand der Schaltung können die Halbbrücken des Gleichrichters wie im ersten Zustand der Schaltung mit Anschlüssen des Wechselstromeingangs der Anordnung verbunden sein.

Eine erfindungsgemäße Anordnung kann zwischen den zwei zweiten Anschlüssen der Brückenschaltung einen Kondensator aufweisen.

Die erfindungsgemäße Anordnung kann eine Drossel oder Spule (nachfolgend wird der Begriff Spule verwendet) aufweisen, die zwischen dem zweiten Schalter und dem ersten Anschluss des Gleichstromeingangs angeordnet ist. Die Spule kann ein energieübertragendes Bauelement des Gleichspannungswandlers bilden, der im zweiten Zustand der Schaltung vorliegt.

Im zweiten Zustand der Schaltung kann der Kondensator parallel zum Eingang des Gleichspannungswandlers und auch parallel zum Ausgang des Gleichrichters angeordnet sein. Der Gleichspannungswandler kann ein Synchronwandler sein.

Bei einer Variante von Anordnungen der zweiten Gruppe kann die Anordnung zwei parallel geschaltete Schaltungen aus ersten steuerbaren Leistungshalbleiterbauelementen aufweisen, nämlich eine erste Schaltung und eine zweite Schaltung. Die Mittel zum Ändern der minimalen einstellbaren Gleichspannung am Gleichstromausgang können Schalter umfassen, mit denen die erste Schaltung aus den ersten steuerbaren Leistungshalbleiterbauelementen durch Umschaltung von Strompfaden aus der Brückenschaltung in einem ersten Zustand in eine Schaltung umwandelbar ist und umgekehrt, die in einem zweiten Zustand zumindest einen Gleichspannungswandler umfasst. Zugleich können die Schalter dafür sorgen, dass die im ersten Zustand parallel zur zweiten Schaltung geschaltete erste Schaltung nun in Reihe zu der zweiten Schaltung liegt. Durch die Umschaltung erhält man damit eine Reihenschaltung aus der Brückenschaltung der zweiten Schaltung und dem wenigstens einen ersten Gleichspannungswandler der ersten Schaltung.

Auch die Variante der erfindungsgemäße Anordnung kann eine Drossel oder Spule (nachfolgend wird der Begriff Spule verwendet) aufweisen, die zwischen dem zweiten Schalter und dem ersten Anschluss des Gleichstromeingangs angeordnet ist. Die Spule kann ein energieübertragendes Bauelement des Gleichspannungswandlers bilden, der im zweiten Zustand der Schaltung vorliegt. Der Gleichspannungswandler kann ein Synchronwandler sein.

Eine erfindungsgemäße Anordnung kann insbesondere in einer Einrichtung eingesetzt werden, in der ein Batteriespeichersystem mit einem sogenannten Power-to-Heat-System und/oder einem Power-to-Gas-System verknüpft ist.

Ein Power-to-Heat-System ist eine Energiewandlereinrichtung, mit der Energie aus dem Versorgungsnetz entnommen werden kann. Die aus dem Netz entnommene Energie kann dann einer anderen Nutzung als im Stromnetz zugeführt werden. Die Energiewandlereinrichtung kann alternativ zum Batteriespeichersystem über eine erfindungsgemäße Anordnung mit dem Netz verbunden werden. Das hat den Vorteil, dass Energie, die aus dem Netz entnommen werden soll und die nicht mehr von dem Batteriespeichersystem aufgenommen werden kann, durch die Energiewandlereinrichtung in eine Energie anderer Form gewandelt werden kann und einer sofortigen oder späteren Nutzung zugeführt werden kann. Diese Energie kann dann genutzt werden, zum Beispiel als Prozesswärme in Produktionsanlagen, zur Heizung von Gebäuden oder zur Langzeitspeicherung von Wärmeenergie. Über eine Umschalteinrichtung kann entweder das Batteriespeichersystem oder die Energiewandlereinrichtung mit dem Gleichstromausgang der erfindungsgemäßen Anordnung verbunden werden.

Der Begriff Power-to-Gas steht für ein Konzept, bei dem überschüssiger Strom dazu verwendet wird, per Wasserelektrolyse mittels eines Elektrolyseurs Wasserstoff zu produzieren und bei Bedarf in einem zweiten Schritt unter Verwendung von Kohlenstoffdioxid ($CO_2$) in synthetisches Methan umzuwandeln. Als Speicher für dieses Methan und bis zu einem gewissen Volumenanteil auch des elementaren Wasserstoffs könnte die bestehende Erdgasinfrastruktur, also das Gasnetz mit den angeschlossenen Untertagespeichern, verwendet werden. Aus überschüssigem Strom oder besser gesagt überschüssiger elektrischer Energie wird und soll dabei Energie genutzt werden, die von Wind- oder Solarkraftwerken geliefert wird, aber nicht ins elektrische Netz eingespeist werden kann, da das Netz nicht hinreichend aufnahmefähig ist. Die Speicherkapazitäten des Gasnetzes sind Speicher zur langfristigen Speicherung von Energie, die zum Beispiel in der Lage sein können, jahreszeitliche Schwankungen des Energiebedarfs und des Energieangebots auszugleichen.

Neben der Nutzung der Speicherkapazitäten des Gasnetzes zur langfristigen Speicherung kann das Gas auch in lokalen Gasspeichern gespeichert werden, die in der Nähe des Elektrolyseurs errichtet werden. Lokale Gasspeicher können insbesondere bei Insellagen auch zur kurz- oder mittelfristigen Speicherung des Gases genutzt werden.

Zur Herstellung des Wasserstoffgases wird ein Elektrolyseur benutzt, der vorzugsweise direkt mit dem die elektrische Energie liefernden Kraftwerk verbunden ist. Es ist aber auch denkbar, dass der Elektrolyseur über das Stromnetz mit dem Kraftwerk verbunden ist und das Kraftwerk und der Elektrolyseur in der Art miteinander gekoppelt sind, dass der Elektrolyseur die Menge an elektrischer Energie aus dem Stromnetz entnimmt, die das Kraftwerk in das Stromnetz einspeist und die von Verbrauchern mangels Bedarf nicht abgenommen werden kann und daher im Grunde überschüssig ist.

In einer Einrichtung, welche ein Batteriespeichersystem mit einem Power-to-Gas-System unter Verwendung einer erfindungsgemäßen Anordnung verknüpft, ist ein Speicher für elektrische Energie, insbesondere eine Batterie, über die erfindungsgemäße Anordnung mit dem Ausgang des Kraftwerkes und/oder dem Stromnetz verbunden. Auch die Vorrichtung zur Erzeugung von Gas ist über die erfindungsgemäße Anordnung mit dem Ausgang des Kraftwerkes und/oder dem Stromnetz verbunden.

Dem Speicher wird vorzugsweise die elektrische Energie zugeführt, die vom Kraftwerk in Zeiten eines Überschusses an elektrischer Energie nicht abgegeben werden kann, weil die Vorrichtung zur Erzeugung von Gas unter Volllast arbeitet und die elektrische Energie auch sonst nicht verbraucht werden kann. Später kann die zugeführte und im Speicher gespeicherte Energie dem Speicher entnommen werden und sie kann in Zeiten eines Mangels an elektrischer Energie aus der Kraftwerkserzeugung für einen optimalen Betrieb oder Nennlastbetrieb der Vorrichtung zur Erzeugung von Gas an die Vorrichtung zur Erzeugung von Gas, z.B. den Elektrolyseur, abgegeben werden. Dadurch können die Zeiten, in denen die Vorrichtung zur Erzeugung von Gas nicht oder nur unzureichend genutzt wird, reduziert werden. Zugleich kann vermieden werden, Strom in das Versorgungsnetz in Zeiten eines Überangebots an elektrischer Energie einzuspeisen.

Werden ein Power-to-Heat-System, ein Power-to-Gas-System und ein Batteriespeichersystem in einer Einrichtung verknüpft, können die eine Energiewandlereinrichtung, die Vorrichtung zur Erzeugung von Gas und der Speicher für elektrische Energie mit dem Gleichstromausgang der erfindungsgemäßen Anordnung verbunden sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

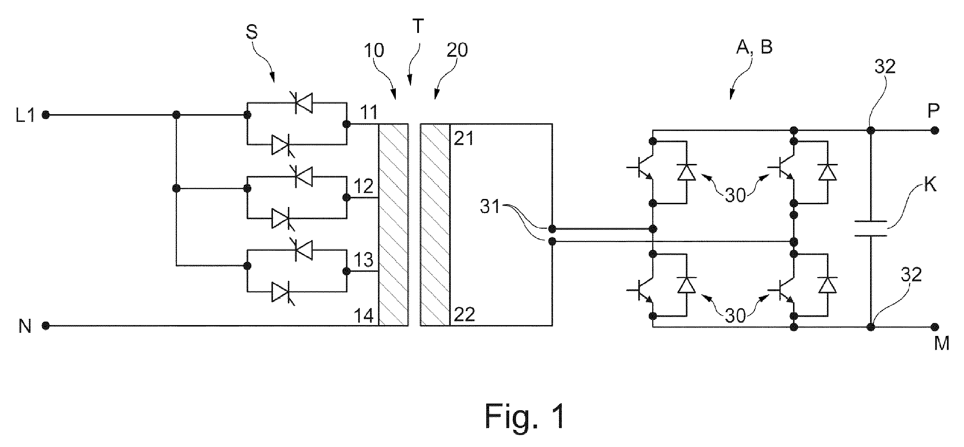

Fig. 1    ein schematisches Schaltbild einer ersten erfindungsgemäßen Stromrichteranordnung,

Fig. 2    ein schematisches Schaltbild einer zweiten erfindungsgemäßen Stromrichteranordnung mit einer Schaltung im ersten Zustand,

Fig. 3    ein schematisches Schaltbild der zweiten Stromrichteranordnung mit der Schaltung im zweiten Zustand,

Fig. 4    ein weiteres schematisches Schaltbild der zweiten Stromrichteranordnung mit der Schaltung im zweiten Zustand,

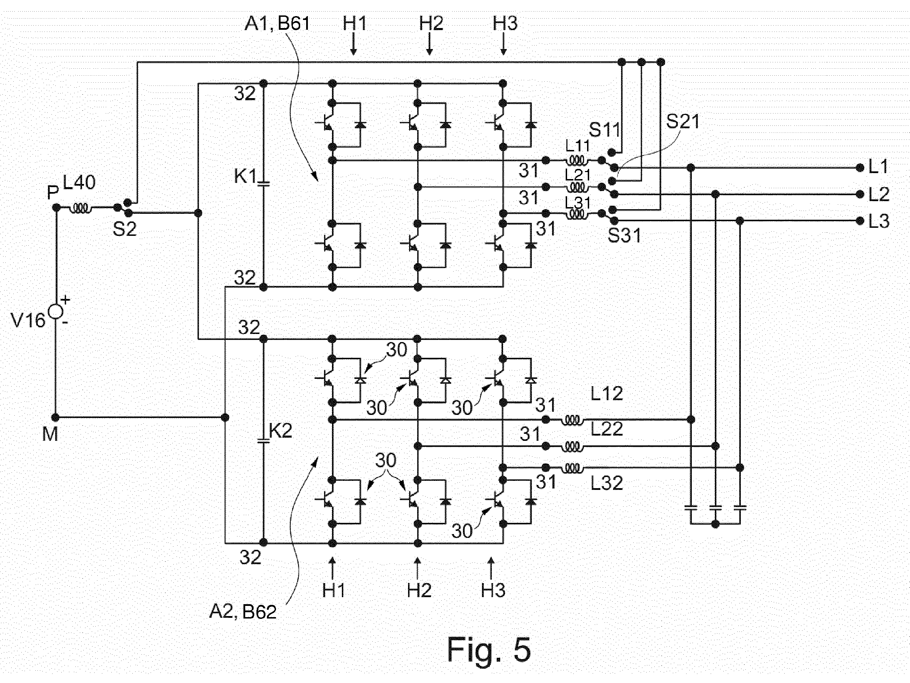

Fig. 5    ein schematisches Schaltbild einer dritten erfindungsgemäßen Stromrichteranordnung mit einer ersten Schaltung und einer zweiten Schaltung im ersten Zustand und

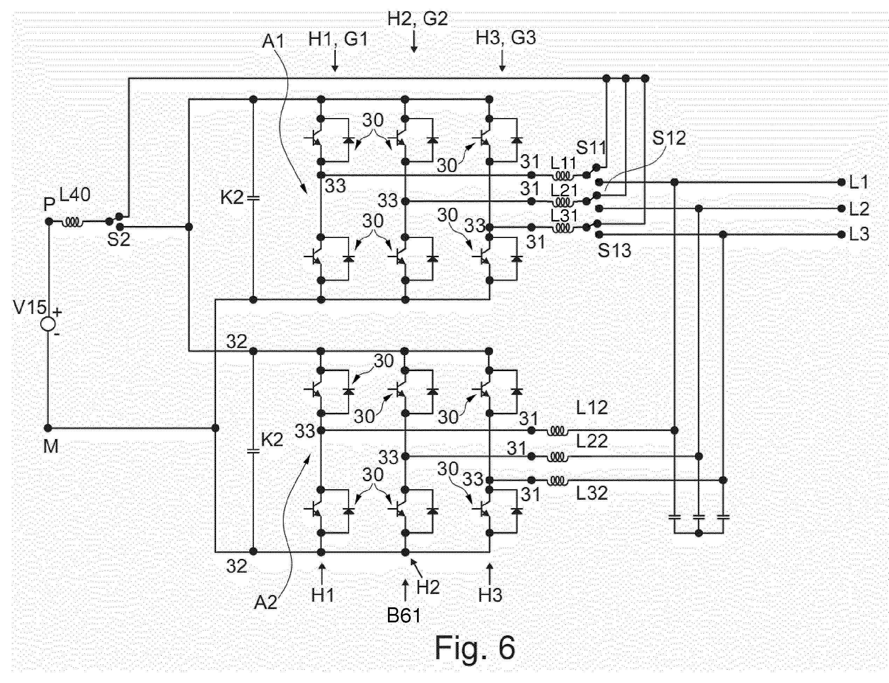

Fig. 6    ein schematisches Schaltbild der dritten erfindungsgemäßen Stromrichteranordnung mit der ersten Schaltung im zweiten Zustand

Die erste erfindungsgemäße Stromrichteranordnung weist einen einphasigen Ein- und Ausgang L1, N für Wechselstrom und einen Ein- und Ausgang P, M für Gleichstrom auf. Die erste Anordnung hat einen Transformator T mit einer Primärwicklung 10, die neben Anschlüssen 11, 14 an den Enden der Primärwicklung zwei Mittelanzapfungen 12, 13 hat. Die Mittelanzapfungen 12, 13 und einer der beiden Anschlüsse 11 der Primärwicklung 10 sind über Leistungssteller S mit einem ersten Anschluss L1 des Ein- und Ausgangs L1, N für Wechselstrom verbunden. Der verbleibende Anschluss 14 an den Enden der Primärwicklung 10 ist mit einem zweiten Anschluss N des Ein- und Ausgangs L1, N für Wechselstrom der ersten Stromrichteranordnung verbunden.

Die Sekundärwicklung 20 liegt parallel zu einer Schaltung aus ersten Leistungshalbleiterbauelementen 30, die so durch elektrische Leiter miteinander verbunden sind, dass sie eine Brückenschaltung B bilden. Erste Anschlüsse 31 der Brückenschaltung B sind an die Anschlüsse 21, 22 der Sekundärwicklung 20 angeschlossen. Dadurch sind sie mittelbar mit dem Ein- und Ausgang L1, N für den Wechselstrom verbunden. Zweite Anschlüsse 32 der Brückenschaltung B sind mit dem Ein- und Ausgang P, M für den Gleichstrom verbunden. Parallel zu dem Ein- und Ausgang P, M für den Gleichstrom ist ein Kondensator K zum Glätten des Gleichstroms angeordnet.

Die Brückenschaltung B kann als Gleichrichter und als Wechselrichter betrieben werden, was durch ein Steuerungsmittel gesteuert werden kann, welches nicht dargestellt ist. Ebenso wenig sind Steuerleitungen dargestellt, über welche die Leistungshalbleiterbauelemente 30 der Brückenschaltung B angesteuert werden können.

Mit den primärseitigen Leistungsstellern S, die durch zweite Leistungshalbleiterbauelemente, vorzugsweise antiparallel geschaltete Thyristoren gebildet werden, kann der stromdurchflossene Teil der Primärwicklung 10 und damit das Übersetzungsverhältnis des Transformators T geändert werden. Damit ist es möglich, dass bei gleicher Primärspannung entsprechend dem eingestellten Übersetzungsverhältnis unterschiedliche Sekundärspannungen bereitgestellt werden. Von diesen Sekundärspannungen getriebene Sekundärströme fließen durch den Brückengleichrichter B und werden gleichgerichtet und können am Ein- und Ausgang P, M für den Gleichstrom abgegriffen werden.

Auch im Wechselrichterbetrieb kann die Möglichkeit genutzt werden, dass Übersetzungsverhältnis des Transformators zu ändern, um trotz sich ändernder Gleichspannung am Ein- und Ausgang P, M für den Gleichstrom am Ein- und Ausgang L1, N für den Wechselstrom stets eine Spannung mit einem konstanten Effektivwert zu haben.

Die Änderung des Übersetzungsverhältnisses durch eine Umschaltung zwischen den Anzapfungen 12, 13 bzw. dem Anschluss 11 kann nicht ausreichend sein, um jede gewünschte Gleichspannung an dem Ein- und Ausgang P, M für den Gleichstrom einzustellen. Durch das Umschalten zwischen den Anzapfungen12, 13 bzw. dem Anschluss 11 der Primärwicklung 10 können nur diskrete Gleichspannungen eingestellt werden. Um eine kontinuierliche Einstellung zu erreichen, können die Leistungssteller S aus den zweiten Leistungshalbleiterbauelementen im Phasenanschnitt betrieben werden. Eine Rückwirkung auf das Netz durch die Phasenanschnittsteuerung zu vermindern, kann eine Spannungsfolgesteuerung benutzt werden.

Der Transformator T und die Leistungssteller S bilden die wesentlichen Komponenten der Mittel zum Ändern der minimalen einstellbaren Gleichspannung am Ein- und Ausgang für den Gleichstrom der ersten erfindungsgemäßen Stromrichteranordnung Die zweite erfindungsgemäße Stromrichteranordnung weist ebenfalls einen Ein- und Ausgang L1, L2, L3 für den Wechselstrom und einen Ein- und Ausgang P, M für den Gleichstrom auf.

Zwischen den beiden Ein- und Ausgängen L1, L2, L3, P, M weist die Anordnung eine Schaltung aus ersten Leistungshalbleiterbauelementen 30 auf. Es handelt sich dabei um Leistungstransistoren, nämlich um IGBTs.

Zwischen den beiden Ein- und Ausgängen L1, L2, L3, P, M weist die Anordnung außerdem Mittel S1, S2 zum Ändern der minimalen einstellbaren Gleichspannung am Ein- und Ausgang für den Gleichstrom der Anordnung. Diese umfassen zwei Schalter. Mittels der Schalter ist es möglich, die Topologie der Schaltung aus den ersten Leistungshalbleiterbauelementen zu ändern. Diese kann zwei Zustände annehmen.

Die Anordnung weist ferner zwischen den beiden Ein- und Ausgängen L1, L2, L3, P, M vier Spulen L10, L20, L30, L40 und einen Kondensator K auf.

In einem ersten Zustand der Schaltung sind die ersten Leistungshalbleiterbauelemente 30 in einer B6-Brückenschaltung B6 angeordnet. Die B6-Brückenschaltung B6 weist drei Halbbrücken auf. Knoten 33 zwischen den Leistungshalbleiterbauelementen 30 jeder Halbbrücke bilden je einen ersten Anschluss der Brückenschaltung B6 oder sind mit je einem ersten Anschluss 31 verbunden. Die ersten Anschlüsse 31 der Brückenschaltung B6 sind über je eine Spule L10, L20, L30 mit je einem Anschluss L1, L2, L3 des Ein- und Ausgangs für den Wechselstrom verbunden.

Einer der Anschlüsse L1 des Ein- und Ausgangs L1, L2, L3 für den Wechselstrom ist über einen ersten Wechselschalter S1 mit der Spule L10 verbunden. Dabei liegen ein gemeinsamer Anschluss des ersten Wechselschalters S10 und ein erste Anschluss des ersten Wechselschalters S10 im Strompfad zwischen dem Anschluss L1 des Ein- und Ausgangs L1, L2, L3 für den Wechselstrom und der Spule L10. Der gemeinsame Anschluss liegt auf der Seite der Spule L10. Der erste Anschluss auf der Seite des Anschlusses L1 des Ein- und Ausgangs L1, L2, L3 für den Wechselstrom. Der erste Wechselschalter S2 weist ferner einen zweiten Anschluss auf.

Enden 34 der Halbbrücken der B6-Brückenschaltung B6 sind miteinander verbunden und bilden je einen zweiten Anschluss der B6-Brückenschaltung B6 oder sind mit je einem zweiten Anschluss 32 der B6-Brückenschaltung B6 verbunden. Zwischen den beiden zweiten Anschlüssen 32 der B6-Brückschaltungen B6 ist der Kondensator K angeordnet. Außerdem ist jeder der beiden zweiten Anschlüsse 32 mit einem von zwei Anschlüssen P, M des Ein- und Ausgangs P, M für den Gleichstrom verbunden.

Einer der zweiten Anschlüsse 32, nämlich der Anschluss für ein positives Potential der sich einstellenden Gleichspannung, ist über einen zweiten Wechselschalter S2 und eine Spule L40 mit dem Anschluss P für das positive Potential der sich am Ein- und Ausgang P, M für den Gleichstrom einstellenden Gleichspannung angeschlossen. Dabei liegen ein gemeinsamer Anschluss des zweiten Wechselschalters S2 und ein erster Anschluss des zweiten Wechselschalters S2 im Strompfad zwischen dem zweiten Anschluss 32 der B6-Brückenschaltung B6 und der Spule L40. Der gemeinsame Anschluss liegt auf der Seite der Spule L40. Der erste Anschluss des zweiten Wechselschalters S2 liegt auf der Seite des zweiten Anschlusses 32 der B6-Brückenschaltung B6. Auch der zweite Wechselschalter S2 weist einen zweiten Anschluss auf. Dieser ist mit dem zweiten Anschluss des ersten Wechselschalters S1 verbunden.

Im ersten Zustand der zweiten erfindungsgemäßen Anordnung sind der erste und der zweite Wechselschalter S1, S2 so eingestellt, dass jeweils der gemeinsame Kontakt mit dem ersten Anschluss verbunden ist.

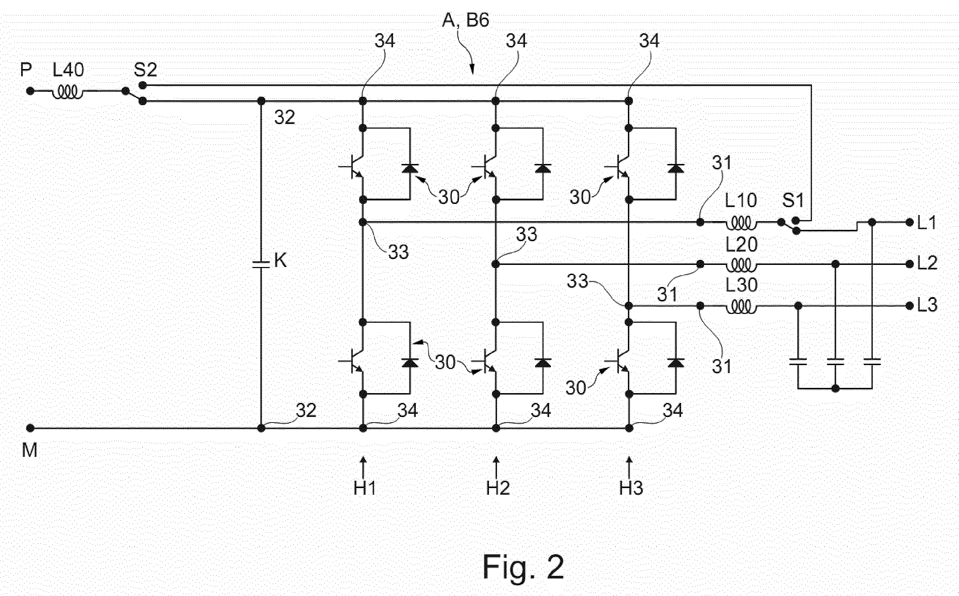

Die zweite erfindungsgemäße Anordnung entspricht in diesem ersten Zustand einem herkömmlichen Dreiphasen-Stromrichter, der als Gleichrichter und als Wechselrichter betrieben werden kann (siehe Fig. 2).

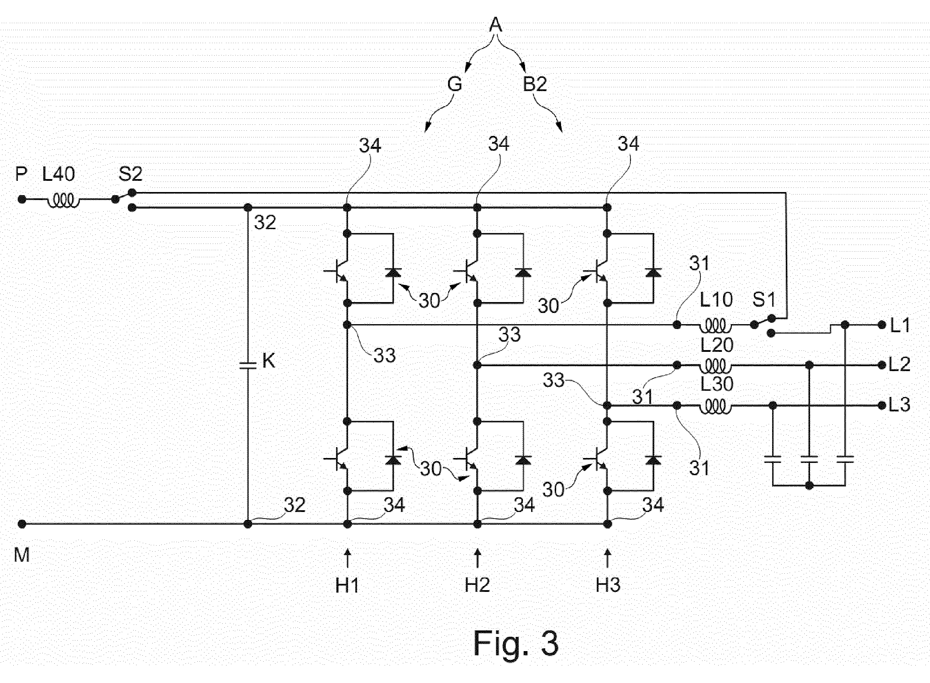

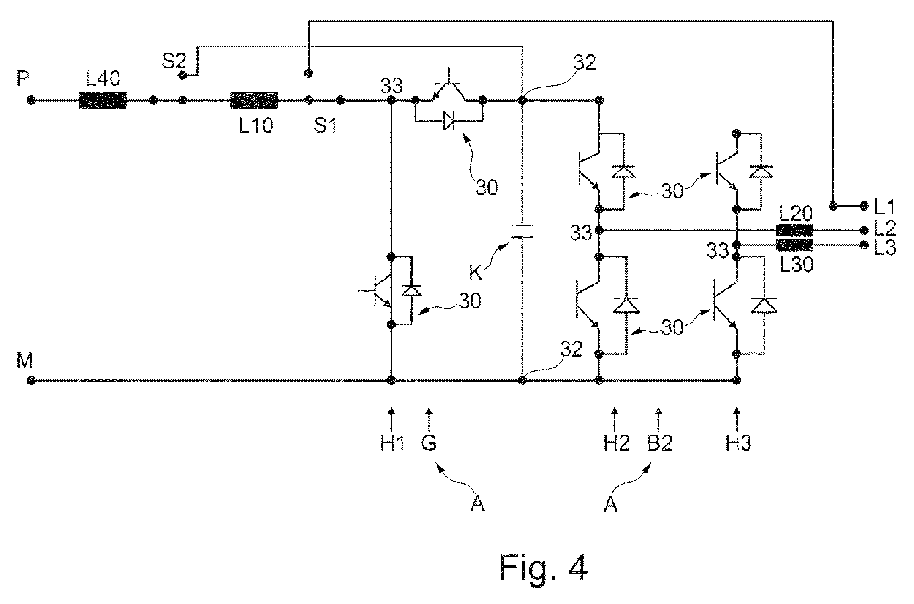

Im zweiten Zustand der zweiten erfindungsgemäßen Anordnung (siehe Fig. 3 und Fig. 4) sind der erste und der zweite Wechselschalter S1, S2 so eingestellt, dass jeweils der gemeinsame Kontakt mit dem zweiten Anschluss verbunden ist. Dadurch wird die B6-Brückenschaltung B6 mit dem Kondensator K auf der Gleichstromseite durch eine B2-Brückenschaltung B2 mit dem Kondensator auf der Gleichstromseite und einem Gleichspannungswandler G ersetzt, der an die Gleichstromseite der B2-Brückenschaltung angeschlossen ist. Die Fig. 3 und die Fig. 4 zeigen die gleiche Anordnung im gleichen, nämlich dem zweiten Zustand. In Fig. 4 ist lediglich eine andere zeichnerische Anordnung der Schaltzeichen gewählt, um insbesondere den Gleichspannungswandler augenfälliger zu zeigen.

Die B2-Brückschaltung ist, wie es für B2-Brückschaltungen üblich ist, aus zwei Halbbrücken aufgebaut, nämlich aus zwei Halbbrücken H2, H3 aus den ersten Leistungshalbleiterbauelementen 30. Deren Knoten 33 sind wie bisher auf der Wechselstromseite über je eine der Spulen L20, L30 mit je einem der Anschlüsse L2, L3 des Ein- und Ausgangs L1, L2, L3 für den Wechselstrom verbunden. Die Enden 34 der beiden Halbbrücken H2, H3 bilden die Gleichstromseite der B2-Brückenschaltung, die als Gleichrichter und als Wechselrichter betrieben werden kann.

Gleichspannungswandler G erfordern in der Regel einen gesteuerten Schalter und eine Diode oder zwei gesteuerte Schalter. Diese werden durch die beiden ersten Leistungshalbleiterbauelemente 30 bereitgestellt, die im ersten Zustand Teil der Halbbrücke H1 der B6-Brückenschaltung B6 sind, deren Knoten 33 über eine der Spulen L10 und dem ersten Wechselschalter S1 mit einem der Anschlüsse L1 des Ein- und Ausgangs für den Wechselstrom verbunden sind. Durch das Umschalten des ersten und des zweiten Wechselschalters S1, S2 werden die beiden Leistungshalbleiterbauelemente 30 dieser Halbbrücke H1 bzw. die gesamte Halbbrücke H1 aus dem Verbund mit den anderen beiden Halbbrücken H2, H3 gelöst, die die B2-Brückenschaltung B2 bilden. Sie finden sich dann auf der Gleichstromseite der B2-Brückenschaltung B2. Der Knoten 33 dieser Halbbrücke H1 ist dann über eine Reihenschaltung aus der Spule L10, dem ersten Wechselschalter S1, dem zweiten Wechselschalter S2 und der Spule L40 mit dem Anschluss P für das positive Potential des Ein- und Ausgangs P, M für den Gleichstrom verbunden. Dadurch entsteht ein Gleichspannungswandler G vom Typ eines Synchronwandlers, der für einen bidirektionalen Energietransport ausgelegt ist. Der Ein- und Ausgang P, M für den Gleichstrom der Stromrichteranordnung bildet zugleich einen Ein- und Ausgang des Gleichspannungswandlers G. Ein weiterer Ein- und Ausgang des Gleichspannungswandlers G ist mit der Gleichspannungsseite der B2-Brückenschaltung B2 verbunden. Der Gleichspannungswandler G kann mit bekannten Verfahren betrieben werden, um am Ein- und Ausgang P, M für den Gleichstrom der Stromrichteranordnung eine geringere Spannung bereitzustellen als auf der Gleichspannungsseite der B2-Brückenschaltung B2 oder als es mit der B6-Brückschaltung B6 im ersten Zustand der Schaltung möglich wäre.

Die dritte erfindungsgemäße Stromrichteranordnung nutzt die von der zweiten erfindungsgemäßen Stromrichteranordnung bekannte Möglichkeit, durch Umschaltung von Strompfaden, also einer Änderung der Topologie, Gleichspannungswandler G1, G2, G3 zu schaffen, mit denen es dann möglich ist, geringere Gleichspannungen zu erzeugen, als es mit einer B6-Brückenschaltung B6 möglich wäre.

Die dritte erfindungsgemäße Stromrichteranordnung umfasst eine erste und eine zweite Schaltung A1, A2, die aus je sechs ersten Leistungshalbleiterbauelementen 30 aufgebaut sind. Die Anordnung umfasst ferner vier Wechselschalter S11, S12, S13, S2 als Mittel zum Ändern der minimalen einstellbaren Gleichspannung am Ein- und Ausgang P, M für den Gleichstrom der Anordnung, mit denen eine Topologieänderung möglich ist. Geändert werden kann bei der dritten Anordnung nur die Topologie der ersten Schaltung A1. Die Topologie der zweiten Schaltung A2 kann nicht geändert werden.

In einem ersten Zustand ist die erste Schaltung A1 eine **B6-**Brückenschaltung, die nachfolgend als erste B6-Brückenschaltung B61 bezeichnet wird. Auch die zweite Schaltung ist eine B6- Brückenschaltung. Sie wird als zweite B6-Brückenschaltung B62 bezeichnet. Wechselstromseitig weisen die B6-Brückenschaltungen B61, B62 erste Anschlüsse 31 auf, die mit den Knoten 33 der drei Halbbrücken H1, H2, H3 der B6-Brückenschaltungen B61, B62 verbunden sind.

Die ersten Anschlüsse 31 der ersten B6-Brückenschaltung B61 sind über je eine Spule L11, L21, L31 und je einen ersten Wechselschalter S11, S21, S31 mit je einem der Anschlüsse L1, L2, L3 des Ein- und Ausgangs für den Wechselstrom der Anordnung verbunden. Die ersten Wechselschalter S11, S21, S31 haben gemeinsame Anschlüsse, die auf der Seite der Spule liegen. Erste Anschlüsse der ersten Wechselschalter S11, S21, S31 sind mit den Anschlüssen des Ein- und Ausgangs L1, L2, L3 für den Wechselstrom verbunden.

Die ersten Anschlüsse 31 der zweiten B6-Brückenschaltung B62 sind über je eine Spule L12, L22, L32 mit je einem der Anschlüsse L1, L2, L3 des Ein- und Ausgangs für den Wechselstrom der Anordnung verbunden.

Gleichstromseitig weisen beide B6-Brückenschaltungen B61, B62 zweite Anschlüsse 32 auf. Zwischen die zweiten Anschlüsse 32 jeder der beiden B6-Brückenschaltungen B61, B62 ist je ein Kondensator K1, K2 geschaltet. Diese dienen der Glättung des Gleichstroms, der im Gleichrichterbetrieb von den B6-Brückenschaltungen B61, B62 bereitgestellt wird.

Die beiden zweiten Anschlüsse 32 für das negative Potential der beiden B6-Brückenschaltungen B61, B62 sind miteinander und mit dem Anschluss M für das negative Potential des Ein- und Ausgangs P, M für den Gleichstrom der dritten Stromrichteranordnung verbunden.

Die beiden zweiten Anschlüsse 32 für das positive Potential der beiden B6-Brückenschaltungen B61, B62 sind miteinander und über einen zweiten Wechselschalter S2 und eine Spule L40 mit dem Anschluss P für das positive Potential des Ein- und Ausgangs P, M für den Gleichstrom der dritten Stromrichteranordnung verbunden. Ein gemeinsamer Anschluss des zweiten Wechselschalters S2 ist dabei auf der Seite der Spule L40 vorgesehen und ein erster Anschluss auf der Gleichstromseite der B6-Brückenschaltungen B61, B62.

In dem so beschrieben ersten Zustand können beide Schaltungen A1, A2 gleichzeitig als Wechselrichter oder Gleichrichter betrieben werden.

Beide B6-Brückenschaltungen B61, B62 sind im Grunde genommen mit den wechselstromseitig vorgeschalteten Spulen L11, L21, L31, L12, L22, L32 parallel zwischen Ein- und Ausgang L1, L2, L3 für den Wechselstrom und dem Ein- und Ausgang P, M für den Gleichstrom geschaltet und können parallel betrieben werden.

Im zweiten Zustand der ersten Schaltung A1 sind die ersten und der zweite Wechselschalter S11, 21, S31, S2 umgeschaltet. Zweite Anschlüsse der Wechselschalter S11, 21, S31, S2, die untereinander verbunden sind, sind dann mit den gemeinsamen Anschlüssen der Wechselschalter S11, 21, S31, S2 verbunden. Durch das Umschalten der Wechselschalter S11, 21, S31, S2 entstehen aus der ersten Schaltung A1 drei parallel geschaltete Gleichspannungswandler G1, G2, G3 vom Typ eines Synchronwandlers. Diese Gleichspannungswandler G1, G2, G3 sind zwischen den Ein- und Ausgang P, M für den Gleichstrom der Anordnung und den zweiten Anschlüssen 32 der zweiten Schaltung parallel geschaltet, die nach wie vor eine B6-Brückenschaltung B62 ist. Da sowohl die Gleichspannungswandler G1, G2, G3 als auch die B6-Brückenschaltung B61 bidirektional betrieben werden können, ist die dritte Anordnung eine bidirektionale Stromrichteranordnung, die sowohl im ersten Zustand der ersten Schaltung A1 als auch im zweiten Zustand der ersten Schaltung A1 als Gleichrichter und als Wechselrichter betrieben werden kann. Je nachdem, welche Gleichspannung am Ein- und Ausgang P, M für den Gleichstrom eingestellt werden soll oder anliegt, kann die erste Schaltung A1 in den ersten Zustand (bei hoher Gleichspannung) oder in den zweiten Zustand (bei niedriger Gleichspannung) gebracht werden. Die Grenze zwischen dem Betrieb im ersten Zustand und im zweiten Zustand kann durch die im ersten Zustand minimale einstellbare Gleichspannung am Ein- und Ausgang P, M für den Gleichstrom der Anordnung bestimmt werden. Im zweiten Zustand der ersten Schaltung wird im Gleichrichterbetrieb die Stromrichteranordnung von der verketteten Spannung zwischen den Anschlüssen L2 und L3 des Ein- und Ausgangs L1, L2, L3 der Anordnung betrieben.

**Patentansprüche**

1. Stromrichteranordnung zum Gleichrichten von Wechselstrom mit mindestens einer Phase

   - mit zumindest einem Wechselstromeingang (L1, N; L1, L2, L3) zur Verbindung mit Außenleitern eines Drei- oder Mehrphasenwechselstromnetzes oder mit einem Außenleiter-Neutralleiter-Paar eines Einphasenwechselstromnetzes,
   - mit einem Gleichstromausgang (P, M),
   - mit zumindest einer Schaltung (A, A1, A2) aus ersten steuerbaren Leistungshalbleiterbauelementen (30),

     - wobei die ersten Leistungshalbleiterbauelemente (30) der zumindest einen Schaltung (A, A1, A2) aus ersten steuerbaren Leistungshalbleiterbauelementen (30) durch elektrische Leiter so verbunden sind, dass sie in einer Brückenschaltung (B, B6, B61, B62) angeordnet sind,
     - wobei die zumindest eine Brückenschaltung (B, B6, B61, B62) erste Anschlüsse (31) hat, die mittelbar oder unmittelbar mit Anschlüssen (L1, N; L1, L2, L3) des Wechselstromeingangs verbunden sind, und
     - die zwei zweite Anschlüsse (32) hat, die mit Anschlüssen (P, M) des Gleichstromausgangs verbunden sind,

und

- mit einem Steuerungsmittel zur Steuerung der ersten Leistungshalbleiterbauelemente (30) mit einem in dem Steuerungsmittel implementierten Steuerverfahren, wobei durch das Steuerverfahren und die zumindest eine Brückenschaltung (B, B6, B61, B62) eine minimale einstellbare Gleichspannung am Gleichstromausgang der Anordnung vorgegeben ist,

**dadurch gekennzeichnet, dass**
die Stromrichteranordnung Mittel (S, T; S1, S2, S11, S12, S13) zum Ändern der minimalen einstellbaren Gleichspannung am Gleichstromausgang (P, M) der Anordnung aufweist.

2. Anordnung nach Anspruch 1, **dadurch gekennzeichnet, dass** die Mittel zum Ändern der minimalen einstellbaren Gleichspannung am Gleichstromausgang (P, M) zwischen den Wechselstromeingang (L1, N) und den ersten Anschlüssen (31) der Brückenschaltung (B) angeordnet sind und einen Transformator (T) aufweisen, dessen wenigstens eine Primärwicklung (10) neben einem Anschluss (11) für einen Außenleiteranschluss (11) des Wechselstromeingangs der Anordnung an einem Ende der Primärwicklung (10) wenigstens einen weiteren Anschluss (12, 13) für den gleichen Außenleiteranschluss des Wechselstromeingangs aufweist, der eine Mittelanzapfung der Primärwicklung (10) ist, wobei diese wenigstens zwei Anschlüsse (11, 12, 13) der Primärwicklung (10) über je einen bidirektionalen zweiten steuerbaren Schalter, insbesondere Schütz, Relais oder Leistungshalbleiterschalter (S) mit dem Außenleiteranschluss (L1) des Wechselstromeingangs verbunden sind.

3. Anordnung nach Anspruch 1, **dadurch gekennzeichnet, dass** die Mittel zum Ändern der minimalen einstellbaren Gleichspannung am Gleichstromausgang (P, M) zwischen dem Wechselstromeingang und den ersten Anschlüssen (31) der Brückenschaltung (B) angeordnet sind und einen Transformator (T) aufweisen, dessen wenigstens eine Sekundärwicklung (20) neben einem Anschluss an einem Ende der Wicklung, der mit einem der ersten Anschlüsse der Brückenschaltung verbunden ist, wenigstens einen weiteren Anschluss für den gleichen der ersten Anschlüsse der Brückenschaltung aufweist, der eine Mittelanzapfung der Sekundärwicklung ist, wobei diese wenigstens zwei Anschlüsse der Sekundärwicklung über je einen bidirektionalen zweiten steuerbaren Leistungshalbleiterschalter mit dem genannte Anschluss der ersten Anschlüsse der Brückenschaltung verbunden sind.

4. Anordnung nach Anspruch 2 oder 3, **dadurch gekennzeichnet, dass** die bidirektionalen zweiten steuerbaren Schalter (S) der Mittel zum Ändern der minimalen einstellbaren Gleichspannung am Gleichstromausgang (P, M) mittels des Steuerungsmittels wechselweise für die Dauer von vollen oder halben Perioden einer Spannung am Wechselspannungseingang einschaltbar oder ausschaltbar sind, mit Phasenanschnitt einschaltbar oder mit Phasenabschnitt ausschaltbar sind oder in Spannungsfolgesteuerung einschaltbar sind.

5. Anordnung nach Anspruch 1, **dadurch gekennzeichnet, dass** die Mittel zum Ändern der minimalen einstellbaren Gleichspannung am Gleichstromausgang (P, M) Schalter (S1, S2) umfassen, mit denen die Schaltung (A) aus den ersten steuerbaren Leistungshalbleiterbauelementen (30) durch Umschaltung von Strompfaden

- aus der Brückenschaltung (B6) in einem ersten Zustand der Schaltung (A)
- in eine Schaltung umfassend einen zumindest einphasigen Gleichrichter (B2) und einen Gleichspannungswandler (G) in einem zweiten Zustand der Schaltung (A)

umwandelbar ist und umgekehrt.

6. Anordnung nach Anspruch 5, **dadurch gekennzeichnet, dass** ein erster Schalter (S1) der Schalter der Mittel zum Ändern der minimalen einstellbaren Gleichspannung am Gleichstromausgang (P, M) ein erster Wechselschalter ist, der einen gemeinsamen Anschluss hat, der im ersten Zustand der Schaltung (A) einen der ersten Anschlüsse (31) der Brückenschaltung (B6) bildet oder mit diesem verbunden ist, und der einen ersten Anschluss hat, der vom gemeinsamen Anschluss verschieden ist, der mit einem der Anschlüsse (L1) des Wechselstromeingangs der Anordnung verbunden ist.

7. Anordnung nach Anspruch 5 oder 6, **dadurch gekennzeichnet, dass** ein zweiter Schalter (S2) der Schalter der Mittel zum Ändern der minimalen einstellbaren Gleichspannung am Gleichstromausgang (P, M) ein zweiter Wechselschalter ist, der einen gemeinsamen Anschluss hat, der mit einem ersten Anschluss (P) des Gleichstromausgangs der Anordnung zumindest mittelbar verbunden ist, und der einen ersten Anschluss hat, der von dem gemeinsamen Anschluss verschieden ist, der im ersten Zustand der Schaltung (A) einen der zweiten Anschlüsse (32) der Brückenschaltung (B6) bildet oder mit diesem verbunden ist.

8. Anordnung nach Anspruch 6 und 7, **dadurch gekennzeichnet, dass** der erste Wechselschalter (S1) einen zweiten Anschluss hat, der von dem gemeinsamen Anschluss und dem ersten Anschluss des ersten Wechselschalters (S1) verschieden ist, dass der zweite Wechselschalter (S2) einen zweiten Anschluss hat, der von dem gemeinsamen Anschluss und dem ersten Anschluss des zweiten Wechselschalters (S2) verschieden ist, und dass die zweiten Anschlüsse der Wechselschalter (S1, S2) miteinander verbunden sind.

9. Anordnung nach einem der Ansprüche 1 bis 8, **dadurch gekennzeichnet, dass** der Wechselstromeingang drei Wechselstromeingangsanschlüsse (L1, L2, L3) aufweist, die Brückenschaltung eine B6-Brückenschaltung aus den ersten steuerbaren Leistungshalbleiterbauelementen (30) ist, die in drei Halbbrücken (H1, H2, H3) angeordnet sind, wobei Knoten (33) der Halbbrücken (H1, H2, H3) mit je einem ersten Anschluss (31) der Brückenschaltung (B6) verbunden sind.

10. Anordnung nach den Ansprüchen 8 und 9, **dadurch gekennzeichnet, dass** im zweiten Zustand der Schaltung (A) die ersten Leistungshalbleiterbauelemente (30), die im ersten Zustand eine erste (H1) der drei Halbbrücken bilden, Schaltelemente des Gleichspannungswandlers (G) bilden, während die ersten Leistungshalbleiterbauelemente (30), die im ersten Zustand eine zweite (H2) und/oder eine dritte (H3) der drei Halbbrücken bilden, im zweiten Zustand den Gleichrichter (B2) bilden.

11. Anordnung nach Anspruch 10, **dadurch gekennzeichnet, dass** die ersten Leistungshalbleiterbauelemente (30), die im ersten Zustand der Schaltung (A) eine zweite (H2) und/oder eine dritte (H3) der drei Halbbrücken bilden, im zweiten Zustand der Schaltung Halbrücken (H2, H3) des Gleichrichters (B2) bilden.

12. Anordnung nach Anspruch 10 oder 11, **dadurch gekennzeichnet, dass** im zweiten Zustand der Schaltung (A) der Knoten (33), zwischen den die beiden Schaltelemente des Gleichspannungswandlers (G) bildenden ersten Leistungshalbleiterbauelemente (30) über den gemeinsamen Anschluss und den zweiten Anschluss des ersten Schalters (S1) und den zweiten Anschluss und den gemeinsamen Anschluss des zweiten Schalters (S1) mit dem ersten Anschluss (P) des Gleichstromausgangs verbunden ist.

13. Anordnung nach Anspruch 11, **dadurch gekennzeichnet, dass** im zweiten Zustand der Schaltung (A) die Knoten (33) der Halbbrücken (H2, H3) des Gleichrichters (B2) wie im ersten Zustand der Schaltung mit Anschlüssen (L2, L3) des Wechselstromeingangs der Anordnung verbunden sind.

14. Anordnung nach einem der Ansprüche 1 bis 13, **dadurch gekennzeichnet, dass** die Anordnung zwischen den zwei zweiten Anschlüssen (32) der Brückenschaltung (B6, B2) einen Kondensator (K) aufweist.

15. Anordnung nach den Ansprüchen 11 und 14, **dadurch gekennzeichnet, dass** im zweiten Zustand der Schaltung (A) der Kondensator (K) parallel zum Eingang des Gleichspannungswandlers (G) und auch parallel zum Ausgang des Gleichrichters (B2) angeordnet ist.

16. Anordnung nach Anspruch 1, **dadurch gekennzeichnet,**

- **dass** die Anordnung zwei parallel geschaltete Schaltungen (A1, A2) aus ersten steuerbaren Leistungshalbleiterbauelementen (30) aufweist, nämlich eine erste Schaltung (A1) und eine zweite Schaltung (A2) und
- **dass** die Mittel zum Ändern der minimalen einstellbaren Gleichspannung am Gleichstromausgang Schalter (S11, S21, S31, S2) umfassen, mit denen die erste Schaltung (A1) aus den ersten steuerbaren Leistungshalbleiterbauelementen (30) durch Umschaltung von Strompfaden
- aus der Brückenschaltung (B61) in einem ersten Zustand der Schaltung (A1)
- in eine Schaltung umfassend einen zumindest einen Gleichspannungswandler (G1, G2, G3) in einem zweiten Zustand der Schaltung (A2)

umwandelbar ist und umgekehrt.

Fig. 1

Fig. 2

Fig. 3

Fig. 4

EP 3 176 937 A1

Fig. 5

Fig. 6

Europäisches
Patentamt

European
Patent Office

Office européen
des brevets

## EUROPÄISCHER RECHERCHENBERICHT

Nummer der Anmeldung

EP 15 19 7248

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/120966 A1 (ALSTOM TECHNOLOGY LTD [CH]) 22. August 2013 (2013-08-22) * Seite 12, Zeile 13 - Seite 21, Zeile 28; Abbildungen 2A,2B,3A,3B * ----- | 1,9,14 | INV. H02M7/219 H02M7/17 H02M1/10 H02M5/12 |
| X | US 3 623 139 A (DICKERSON ARTHUR F) 23. November 1971 (1971-11-23) * das ganze Dokument * ----- | 1-4 | H02M1/32 H02J7/02 H02M3/158 |
| X | US 2006/072352 A1 (GHOSH RAJESH [IN] ET AL) 6. April 2006 (2006-04-06) * Absätze [0001] - [0004] * * Absätze [0018] - [0022]; Abbildungen 3-5 * ----- | 1 | |
| A | US 2013/308361 A1 (STEIGERWALD ROBERT LOUIS [US] ET AL) 21. November 2013 (2013-11-21) * das ganze Dokument * ----- | 1-4 | |
| A | EUNG-HO KIM ET AL: "Practical Control Implementation of a Three-to Single-Phase Online UPS", IEEE TRANSACTIONS ON INDUSTRIAL ELECTRONICS, IEEE SERVICE CENTER, PISCATAWAY, NJ, USA, Bd. 55, Nr. 8, 1. August 2008 (2008-08-01) , Seiten 2933-2942, XP011225175, ISSN: 0278-0046, DOI: 10.1109/TIE.2008.918476 * pages 2937-2939: "C. Battery Charger/Discharger Control"; Abbildungen 2,7 * ----- | 5-16 | **RECHERCHIERTE SACHGEBIETE (IPC)** H02M H02J |

Der vorliegende Recherchenbericht wurde für alle Patentansprüche erstellt

| Recherchenort | Abschlußdatum der Recherche | Prüfer |
|---|---|---|
| Den Haag | 22. September 2016 | van Wesenbeeck, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 15 19 7248

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 15 19 7248

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

    1. Ansprüche: 1-4

        Stromrichteranordnung zum Gleichrichten von Wechselstrom, mit einem Transformator und steuerbaren Schaltern zum Wählen von Mittelanzapfungen der Primärwicklung

                ---

    2. Ansprüche: 5-16

        Stromrichteranordnung zum Gleichrichten von Wechselstrom, mit Schaltern zum Umschalten von Strompfaden durch eine Schaltung aus steuerbaren Leistungshalbleiterelementen

                ---

**ANHANG ZUM EUROPÄISCHEN RECHERCHENBERICHT
ÜBER DIE EUROPÄISCHE PATENTANMELDUNG NR.**

EP 15 19 7248

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2016

| Im Recherchenbericht angeführtes Patentdokument | Datum der Veröffentlichung | Mitglied(er) der Patentfamilie | Datum der Veröffentlichung |
|---|---|---|---|
| WO 2013120966 A1 | 22-08-2013 | CA 2864299 A1<br>EP 2815493 A1<br>FR 2987181 A1<br>US 2015023074 A1<br>WO 2013120966 A1 | 22-08-2013<br>24-12-2014<br>23-08-2013<br>22-01-2015<br>22-08-2013 |
| US 3623139 A | 23-11-1971 | KEINE | |
| US 2006072352 A1 | 06-04-2006 | US 2006072352 A1<br>US 2007040534 A1 | 06-04-2006<br>22-02-2007 |
| US 2013308361 A1 | 21-11-2013 | CN 103427680 A<br>JP 2013243911 A<br>US 2013308361 A1 | 04-12-2013<br>05-12-2013<br>21-11-2013 |

EPO FORM P0461

Für nähere Einzelheiten zu diesem Anhang : siehe Amtsblatt des Europäischen Patentamts, Nr.12/82

**EP 3 176 937 A1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DUBEY et al.** *Thyristorized Power Controllers,* 2009, ISBN 978-0-85226-190-3